# EUROPEAN PATENT SPECIFICATION

(11) **EP 0 743 792 B1**
(45) Date of publication and mention of the grant of the patent: **14.03.2001**
(21) Application number: 96303038.2
(22) Date of filing: 30.04.1996
(51) Int. Cl.: H04N 7/15

(54) **Method and apparatus for establishing videoconferences**
Verfahren und Einrichtung zum Herstellen von Videokonferenzen
Procédé et appareil pour établir des vidéoconférences

(30) Priority: 16.05.1995 US 442207
(43) Date of publication of application: 20.11.1996
(73) Proprietor: NCR INTERNATIONAL INC., Dayton, Ohio 45479 (US)
(72) Inventor: Burkman, Allen P., Sugar Grove, IL 60554 (US); Carleton, Allison A., Chicago, IL 60622 (US); Pommier, Theresa M., Westmont, IL 60559 (US); Peterson, Paul A., Chicago, IL 60622 (US); Seth, Shiv M., Naperville, IL 60565 (US)
(74) Representative: Cleary, Fidelma

(56) References cited:
- EP-A- 0 535 890
- IEEE COMMUNICATIONS MAGAZINE, vol. 30, no. 5, 1 May 1992, NEW YORK, NY, US, pages 38-43, XP000321469 AHUJA S R ET AL: "COORDINATION AND CONTROL OF MULTIMEDIA CONFERENCING"

## Description

This invention relates to a method and an apparatus for establishing video conferences.

Video conferencing systems exist today, and their use will become more widespread as time progresses. In a typical video conferencing system, all participants in the conference, who are present at different locations, are equipped with video cameras, video displays, audio microphones and audio speakers. This equipment allows the users to see and speak with each other, as though present at a single conference table, in a single room. In addition, the video cameras and displays allow a participant to present materials of interest to the other participants, such as documents or physical objects, as though making a live, personal presentation.

In general, setting up a video conference requires some delays, for several reasons. One is that computers are involved in handling the audio and video signals used in the conference. These computers must, of course, be operative, which requires that they be switched on. Switching-on requires that they run through their initialization routines, which takes time.

Even if the computers are up-and-running, and require no switching, nevertheless, in establishing the video conference, the computer at each participant's location must do things such as (1) agree on modes of data transfer with another computer and (2) run preliminary tests of data transfer, and of certain equipment. Thus, establishing a video conference can require a delay of several seconds, if the computers are up-and-running, or a minute or more, if the computers must be initialized.

Further, the delay is in addition to the inherent delay in placing a telephone call. The computers must dial telephone numbers, and wait for other computers to answer the calls.

European patent application 0535890 relates to a video conferencing system which automatically establishes communication on further channels only if required. In this prior art, the first established audio connection on a first channel is maintained here, and an additional channel is simply added In order to also enable the transmission of video information (see in particular steps 105-109 in figure 10 of this document).

The present invention in accordance with claim 1 provides a method of establishing bidirectional audio and video communication between at least two different locations, the at least two locations being coupled via a telephone service having at least a first channel and a second channel, the method comprising: establishing a bidirectional audio connection for transferring audio signals between the at least two locations using the first channel as an audio channel; establishing a bidirectional data connection for transferring image data between the at least two locations using the second channel as a data channel; terminating the audio connection on the first channel and simultaneously multiplexing audio signals from the audio connection into the data connection so that the multiplexed data is transferred over the second channel between the at least two locations; establishing a bidirectional data connection using the first channel as a data channel; and switching the multiplexed audio signals and image data to use both first and second channels as data channels without substantial interruption of the transfer of the audio signals and image data between the at least two locations.

It will be appreciated that a method according to the invention has the advantage that the participants can still talk while the video conference is being established since in the subject matter claimed any of the transmission paths are terminated prior to the establishment of a multi-path video conference, and any channel termination and re-establishment occurs during the initialisation procedure.

The present invention also provides in accordance with claim 5 an apparatus apparatus for establishing bidirectional audio and video communication between at least two different locations, the at least two locations being coupled via a telephone service having at least a first channel and a second channel, the apparatus comprising: means for establishing a bidirectional audio connection for transferring audio signals between the at least two locations using the first channel as an audio channel; means for establishing a bidirectional data connection for transferring image data between the at least two locations using the second channel as a data channel; means for terminating the audio connection on the first channel and simultaneously multiplexing audio signals from the audio connection into the data connection so that the multiplexed data is transferred over the second channel between the at least two locations; means for establishing a bidirectional data connection using the first channel as a data channel; and
means for switching the multiplexed audio signals and image data to use both first and second channels as data channels without substantial interruption of the transfer of the audio signals and image data between the at least two locations.

Preferred features of the invention will be apparent to the skilled reader from the following description.

One embodiment of the present invention will now be described by way of example with reference to the accompanying drawings in which:-
Figures 1-4 illustrate a sequence of events which will occur during use of the invention; and
Figures 5-11 contain a flow chart explaining events which occur during operation of the invention.

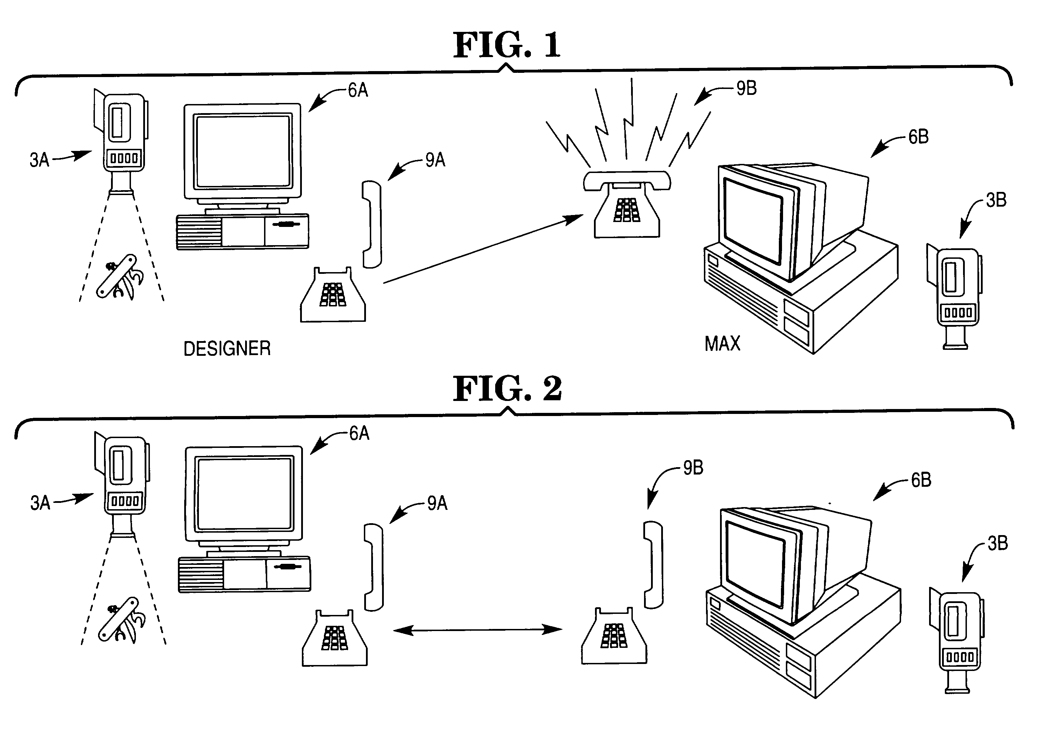

Figure 1 illustrates some of the video conferencing equipment used by two conference participants. Each participant has a video camera 3, shown individually as 3A, B, a micro computer 6, shown individually as 6A, 6B, and a telephone 9, shown individually as 9A, 9B. Audio microphones and speakers are also used, but not shown. The knife designer would pick up telephone 9A, as indicated by the off-hook receiver, and call Max, the advertising manager. It is preferred that, at this time, the designer's computer is running, because the designer's computer will be called upon to dial a second telephone number, as will be explained shortly.

Assume that the two participants are located in different cities, but are working on a common project, such as development of a new pocket knife. One example of their use of the invention would be the following.

Max's telephone 9B rings, as indicated. When Max answers the audio call, telephone 9B goes off-hook, as indicated in Figure 2.

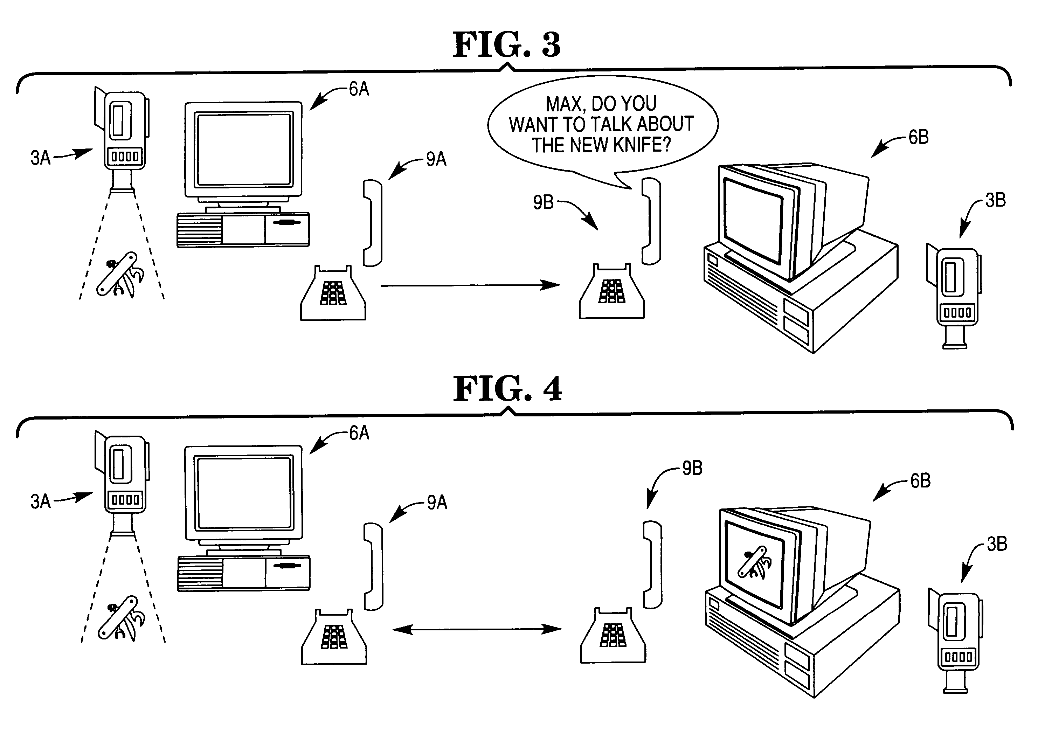

The knife designer now asks whether Max would like to see the new knife, as indicated in Figure 3. If Max says "Yes," then the knife designer actuates the invention, which establishes a video conference, and the knife appears on Max's display.

Significantly, during the initialization procedure for the video conference, the original telephone conference was not disrupted in any significant way. The parties can maintain conversation while the video conference was being set up, and can discuss the progress of the set-up which they observe.

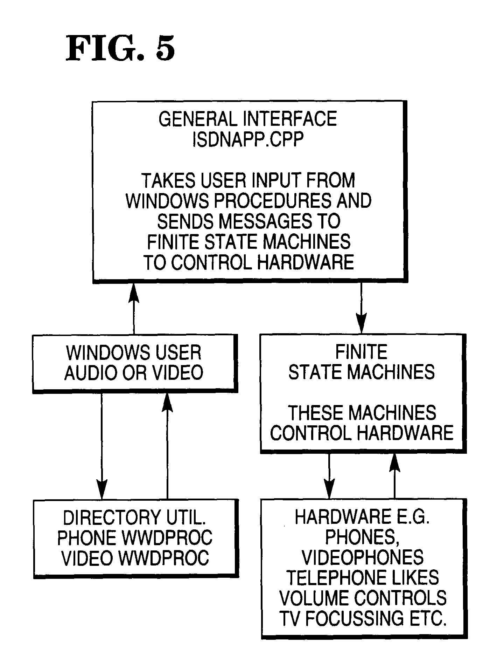

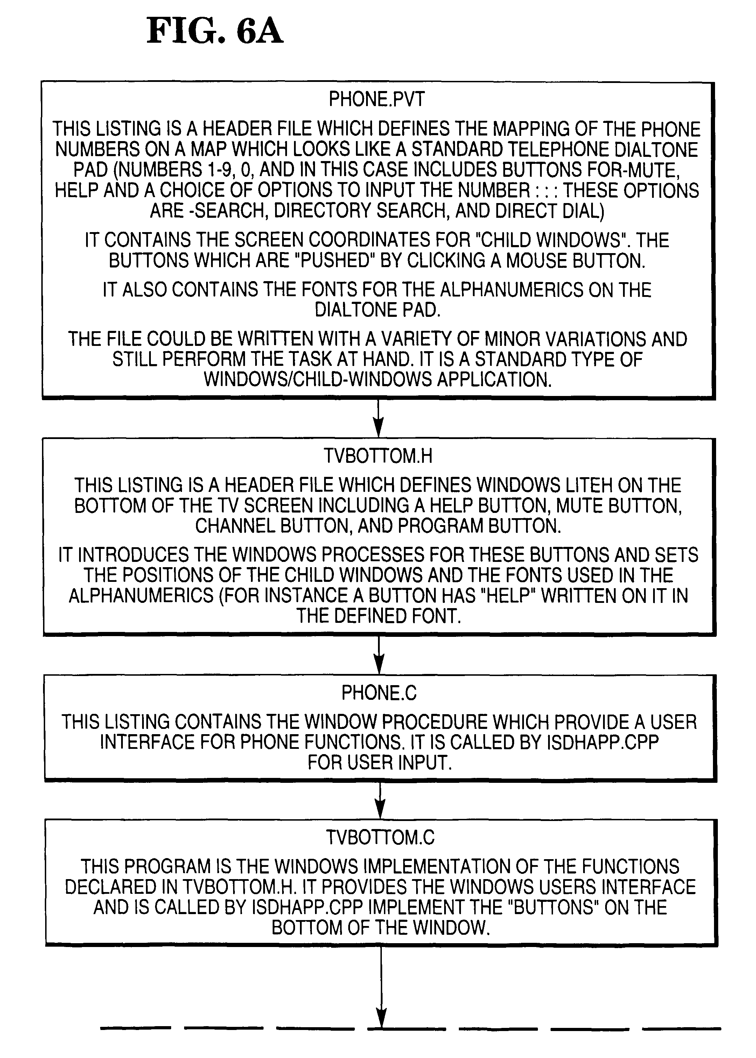

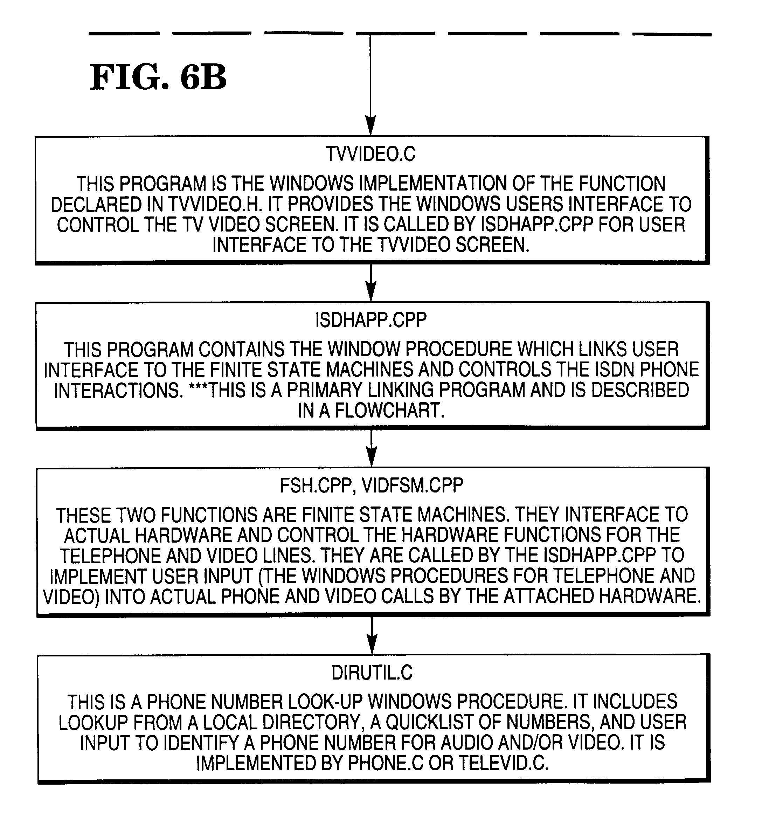

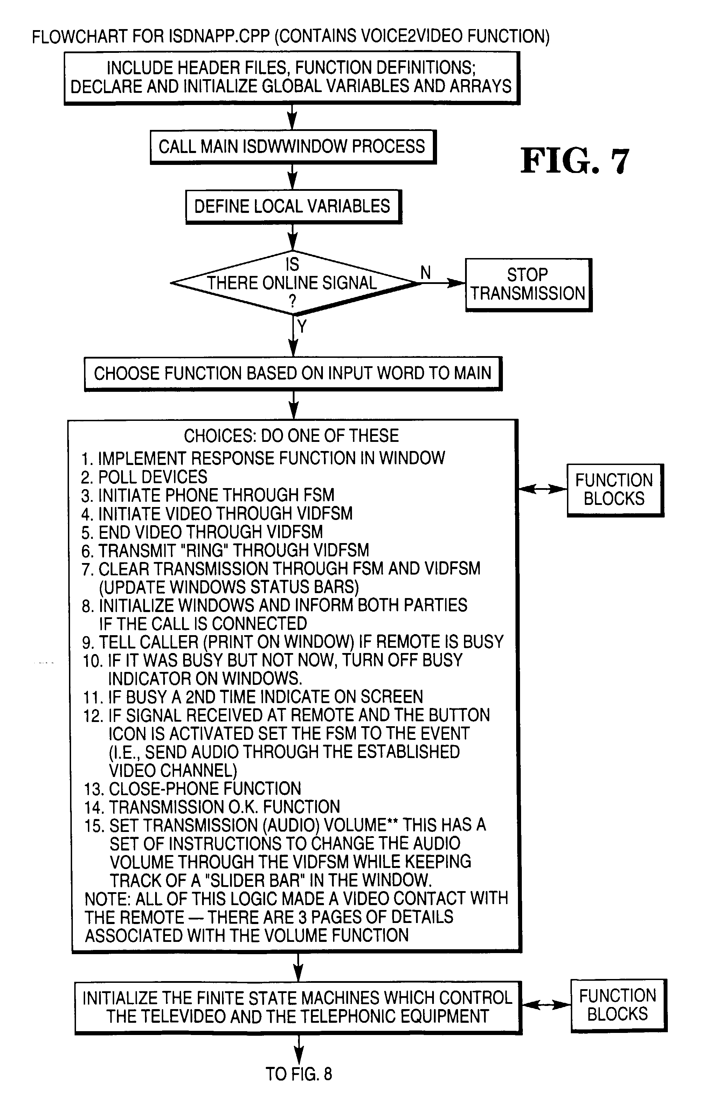

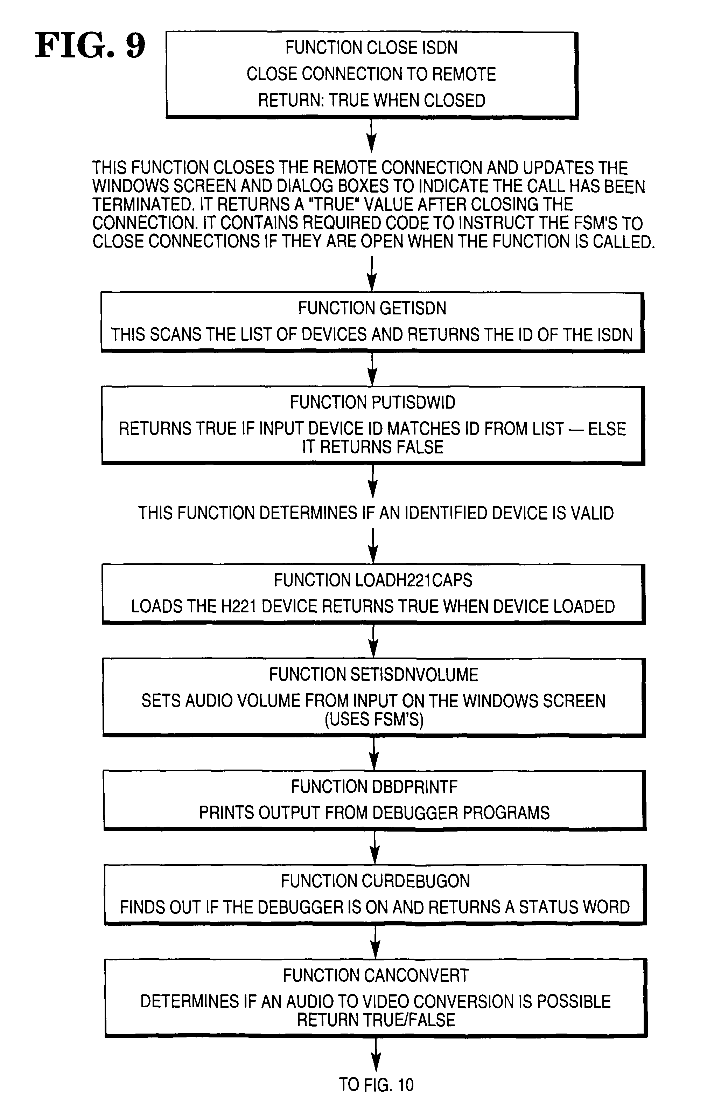

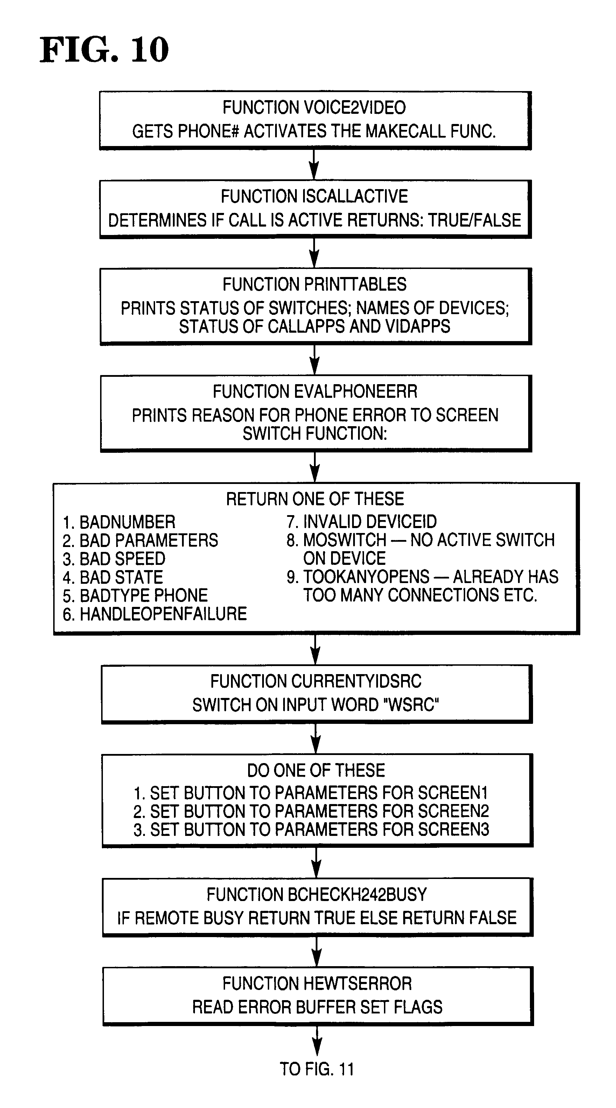

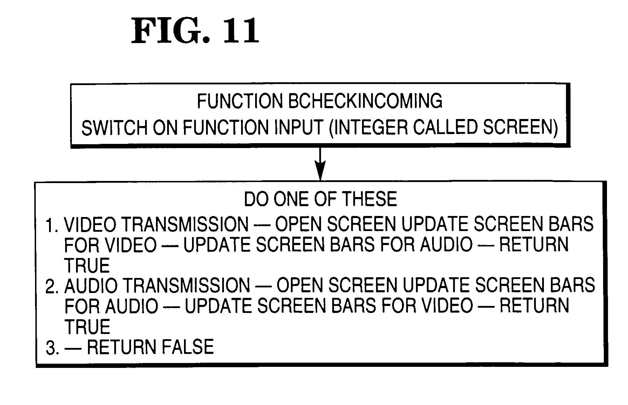

Figures 5 - 11 provide a flow chart which explains the logic followed by the invention, and are considered self-explanatory.

The invention can be used with commercially available video conferencing systems such as the TeleMedia Connection, available from NCR Corporation. This conferencing system utilizes the commercially available ISDN telephone service. This service provides three channels, or "lines," to the user. The invention uses one of the lines in making the initial audio call.

When the called party answers the call, and indicates that a video conference should be undertaken, the caller actuates the invention, preferably by making a selection on a pull-down menu on a computer. The invention then calls the called party's computer, or video conferencing system, using another ISDN channel, and establishes the video conference. During this establishment, the initial audio call, on a first ISDN channel, is undisturbed.

The ISDN channels impose limited bandwidth. The two main channels allow approximately 64 kilobits/second. A third channel is available, which carries certain control signals, and has a significantly reduced data capacity.

Because one 64K channel is used for the initial audio call, the bandwidth available for another call, such as the video conference, is restricted to that in the other channel, namely 64K. Consequently, when the video conference is first established, using this single 64K channel, the video images will be somewhat jerky, and otherwise deficient, compared to the video which can be transmitted using two 64K channels.

To remedy this situation, after the video conference has been established, the bandwidth of the first channel is then devoted to the video conference. That is, the following events take place:
1) The initial audio call is terminated, just as though one of the parties placed a telephone on-hook. At the same time, the audio call is multiplexed into the video conference signals. The parties will hear a small click, or glitch, at this switchover, but their conversation will not be otherwise interrupted.
2) Now the audio channel, used by the initial call, is free. This channel is now used to carry the overall conference signals. The conference signals (video plus audio) are now distributed over the available channels, namely over two 64K channels. Now, optimal bandwidth is available for the video signal, and the jerkiness, and other deficiencies, disappear.

It may seem peculiar that the initial audio call is actually terminated, or "hung up," and then re-established, in order to devote the first channel to carrying conference information. It may be thought that the connection could be maintained, while the invention simply displaced the audio signal by the conferencing signals.

However, this approach is not feasible at this time. The reason is that the ISDN system requires that the user initially specify the type of information which is being sent (voice or data), at the beginning of a call. It is, in general, not feasible to switch from one type to the other during a call.

Because of the termination and re-dialing of the audio call, the user's computer contains the required telephone numbers to automatically dial the called party, via the several ISDN channels.

The video data is preferably transferred using IEEE (Institute of Electrical and Electronic Engineers) standard H221.

Both the audio telephone call and the video conference call can be viewed as essentially involving the transfer of information. Thus, placing the initial, exploratory audio call, using an ISDN channel in voice-transmission mode (or audio mode), involves transfer of audio information; establishing the initial video conference, using an ISDN channel in data-transfer mode, involves transfer of video information; and establishing the final video conference, using multiple ISDN channels in data-transfer mode, involves transfer of both audio and video information. The audio information becomes merged, or multiplexed, with the video information.

Viewed another way, the communication, either audio or video, is made possible by transfer of information. The information transfer supports the audio and video communication.

One aspect of the invention involves dynamic bandwidth allocation. For example, the exploratory audio call, on a first channel, consumes some of the ISDN's total bandwidth capacity. Establishing the initial video conference, on a second channel, consumes additional capacity. Terminating the audio call frees the bandwidth of the first channel, which, together with the second channel, is used to carry the final video conference.

During the initial, exploratory, audio call, far less information is carried by the first channel than is possible. As stated above, the first channel has a capacity of 64,000 bits/second. An ordinary telephone channel, which is capable of carrying this exploratory call, has a bandwidth of about 3,000 Hz.

Thus, during the exploratory call, a channel having a 64,000 bits/second capacity is used to transmit a message which ordinarily can occupy a 3,000 Hz bandwidth. This inefficiency is tolerated, in order to reduce the risk of spending the time to establish a video conference, and finding that other participants cannot attend.

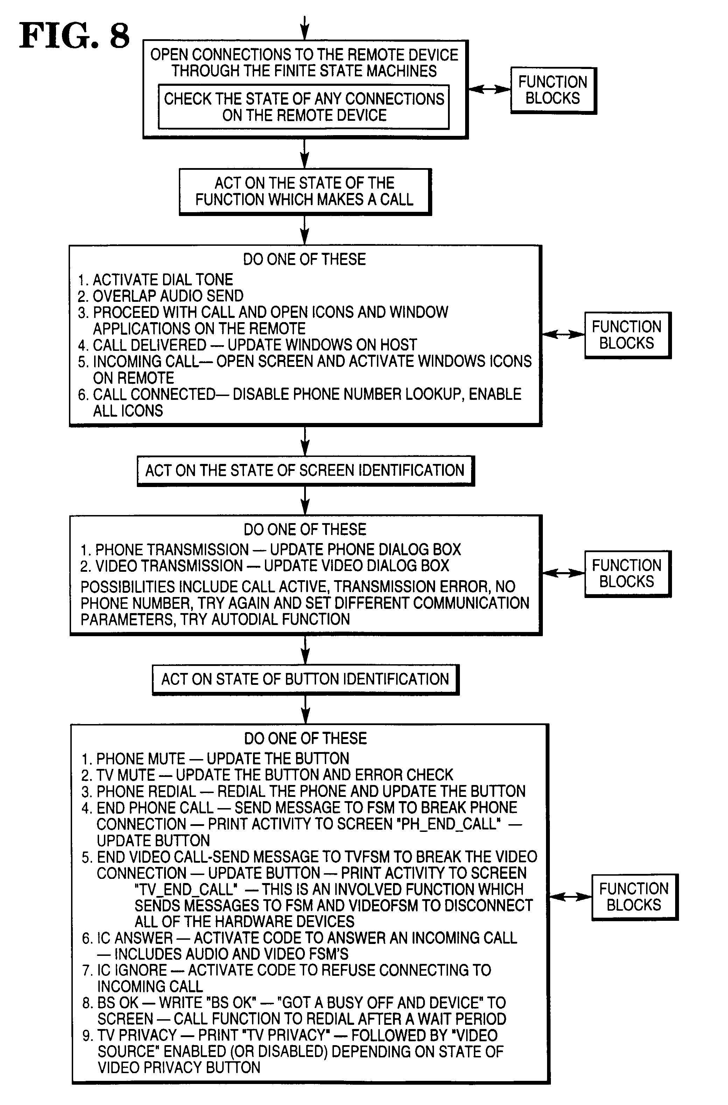

As Figure 8 indicates, near the bottom, a situation called "TV Privacy" may arise. This refers to the fact that the called party's video camera may have been de-activated. If so, the invention takes the actions indicated. In practice, the calling party will probably notify the called party of this deactivation, during the exploratory audio call.

It should be understood that a video conference can be termed a "video call," and an ordinary telephone call can be termed an "audio call."

The preceding discussion has been framed in terms of a single caller holding a video conference with a single other party. The extension to multi-party conferences is straightforward. In particular, it is expected that one person will initiate a video conference, by making exploratory audio calls to the other participants. These calls, in effect, establish a telephone conference, as done in the prior art, with the exception that one channel of an ISDN line is being used, instead of an ordinary telephone line. Then, when all participants are connected in the conference call, the switchover to a video conference is made.

During a video conference, three types of information are transferred: audio, video, and pure data. When the audio call is merged into the video call, there is a 4-to-1 compression of the audio data. Video data, because of its varying amount of redundancy, is compressed varying amounts during the conference. (Video data is that captured by one of the video cameras shown in Figure 1.) Both types of compression (audio and video) are lossy.

In contrast, when pure data is transferred, such as a computer file contained on a disc drive of a conference participant, a non-lossy compression is undertaken.

## Claims

1. A method of establishing bidirectional audio and video communication between at least two different locations, the at least two locations being coupled via a telephone service having at least a first channel and a second channel, the method comprising:
establishing a bidirectional audio connection for transferring audio signals between the at least two locations using the first channel as an audio channel;
establishing a bidirectional data connection for transferring image data between the at least two locations using the second channel as a data channel;
terminating the audio connection on the first channel and simultaneously multiplexing audio signals from the audio connection into the data connection so that the multiplexed data is transferred over the second channel between the at least two locations;
establishing a bidirectional data connection using the first channel as a data channel; and
switching the multiplexed audio signals and image data to use both first and second channels as data channels without substantial interruption of the transfer of the audio signals and image data between the at least two locations.

2. A method as claimed in claim 1, characterized in that the telephone service having at least a first channel and a second channel comprises an ISDN line.

3. A method as claimed in claim 1 or claim 2, characterized in that the step of establishing a bidirectional data connection using the second channel is carried out in response to actuation by a caller and a called parties answer.

4. A method as claimed in any one of claims 1 to 3, characterized in that the transmission of image data from one of the at least two locations may be de-activated by a party.

5. Apparatus for establishing bidirectional audio and video communication between at least two different locations, the at least two locations being coupled via a telephone service having at least a first channel and a second channel, the apparatus comprising:
means for establishing a bidirectional audio connection for transferring audio signals between the at least two locations using the first channel as an audio channel;
means for establishing a bidirectional data connection for transferring image data between the at least two locations using the second channel as a data channel;
means for terminating the audio connection on the first channel and simultaneously multiplexing audio signals from the audio connection into the data connection so that the multiplexed data is transferred over the second channel between the at least two locations;
means for establishing a bidirectional data connection using the first channel as a data channel; and
means for switching the multiplexed audio signals and image data to use both first and second channels as data channels without substantial interruption of the transfer of the audio signals and image data between the at least two locations.

6. Apparatus as claimed in claim 5, characterized in that the telephone service having at least a first channel and a second channel comprises an ISDN line.

7. Apparatus as claimed in claim 5 or claim 6, characterized in that means for establishing a bidirectional data connection using the second channel is arranged to be responsive to actuation by a caller and a called parties answer.

8. Apparatus as claimed in any one of the claims 5 to 7, characterized by means for deactivation of the transmission of image data from one of the at least two locations in response to a party.

## Patentansprüche

1. Verfahren zur Einrichtung einer Zweirichtungs-Ton- und -Videoverbindung zwischen mindestens zwei verschiedenen Orten, die über einen Telefondienst mit mindestens einem ersten Kanal und einem zweiten Kanal miteinander verbunden sind, mit den Schritten:
Einrichten einer Zweirichtungs-Tonverbindung zur Übertragung von Tonsignalen zwischen den mindestens zwei Orten unter Verwendung des ersten Kanals als Tonkanal;
Einrichten einer Zweirichtungs-Datenverbindung zur Übertragung von Bilddaten zwischen den mindestens zwei Orten unter Verwendung des zweiten Kanals als Datenkanal;
Beenden der Tonverbindung auf den ersten Kanal und gleichzeitig Multiplexen der Tonsignale von der Tonverbindung in die Datenverbindung, so daß über den zweiten Kanal zwischen den mindestens zwei Orten Muliplexdaten übertragen werden;
Einrichten einer Zweirichtungs-Datenverbindung unter Verwendung des ersten Kanals als Datenkanal; und
Schalten der Multiplex-Tonsignale und -Bilddaten zur Verwendung sowohl des ersten und des zweiten Kanals als Datenkanäle ohne wesentliche Unterbrechung der Übertragung der Tonsignale und Bilddaten zwischen den mindestens zwei Orten.

2. Verfahren nach Anspruch 1, **dadurch gekennzeichnet**, daß der mindestens einen ersten Kanal und einen zweiten Kanal aufweisende Telefondienst eine ISDN-Leitung umfaßt.

3. Verfahren nach Anspruch 1 oder 2, **dadurch gekennzeichnet**, daß der Schritt der Einrichtung einer Zweirichtungs-Datenverbindung unter Verwendung des zweiten Kanals ausgeführt wird in Reaktion auf eine Betätigung seitens eines Anrufers und eine Antwort des angerufenen Teilnehmers.

4. Verfahren nach einem der Ansprüche 1 bis 3, **dadurch gekennzeichnet**, daß die Übertragung der Bilddaten von einem der mindestens zwei Orte durch einen Teilnehmer deaktivierbar ist.

5. Vorrichtung zur Einrichtung einer Zweirichtungs-Ton- und -Bildverbindung zwischen mindestens zwei Orten, welche über einen Telefondienst mit mindestens einem ersten Kanal und einem zweiten Kanal miteinander verbunden sind, mit:
einer Vorrichtung zur Einrichtung einer Zweirichtungs-Tonverbindung zur Übertragung von Tonsignalen zwischen den mindestens beiden Orten unter Verwendung des ersten Kanals als Tonkanal;
eine Vorrichtung zur Einrichtung einer Zweirichtungs-Datenverbindung zur Übertragung von Bilddaten zwischen den mindestens beiden Orten unter Verwendung des zweiten Kanals als Datenkanal;
einer Vorrichtung zur Beendigung der Tonverbindung auf den ersten Kanal und gleichzeitigem Multiplexen der Tonsignale von der Tonverbindung in die Datenverbindung, so daß zwischen den beiden Orten über den zweiten Kanal Multiplex-Daten übertragen werden;
eine Vorrichtung zur Einrichtung einer Zweirichtungs-Datenverbindung unter Verwendung des ersten Kanals als Datenkanal; und
eine Vorrichtung zum Schalten der Multiplex-Ton- und -Bilddaten unter Verwendung sowohl des ersten als auch des zweiten Kanals als Datenkanäle ohne wesentliche Unterbrechung der Übertragung der Tonsignale und Bilddaten zwischen den mindestens zwei Orten.

6. Vorrichtung nach Anspruch 5, **dadurch gekennzeichnet**, daß der mindestens einen ersten und einen zweiten Kanal aufweisende Telefondienst eine ISDN-Leitung umfaßt.

7. Vorrichtung nach Anspruch 5 oder 6, **dadurch gekennzeichnet**, daß die Vorrichtung zur Einrichtung einer Zweirichtungs-Datenverbindung unter Verwendung des zweiten Signals so eingerichtet ist, daß sie auf eine Betätigung seitens eines Anrufers und die Antwort eines angerufenen Teilnehmers reagiert.

8. Vorrichtung nach einem der Ansprüche 5 bis 7, **gekennzeichnet durch** eine Einrichtung zur Deaktivierung der Bilddatenübertragung von einem der mindestens zwei Orte in Abhängigkeit von einem Teilnehmer.

## Revendications

1. Procédé pour établir des communications audio et vidéo bidirectionnelles entre au moins deux emplacements différents, lesdits au moins deux emplacements étant couplés par l'intermédiaire d'un service téléphonique ayant au moins un premier canal et un deuxième canal, le procédé comportant les étapes consistant à :
établir une connexion audio bidirectionnelle pour transférer des signaux audio entre lesdits au moins deux emplacements en utilisant le premier canal en tant qu'un canal audio ;
établir une connexion de données bidirectionnelle pour transférer des données d'image entre lesdits au moins deux emplacements en utilisant le deuxième canal en tant qu'un canal de données ;
terminer la connexion audio sur le premier canal et simultanément multiplexer des signaux audio provenant de la connexion audio dans la connexion de données de sorte que les données multiplexées sont transférées sur le deuxième canal entre lesdits au moins deux emplacements ;
établir une connexion de données bidirectionnelle en utilisant le premier canal en tant qu'un canal de données ; et
permuter les signaux audio multiplexés et des données d'image pour utiliser les premier et deuxième canaux tous les deux en tant que canaux de données sans interruption notable du transfert des signaux audio et des données d'image entre lesdits au moins deux emplacements.

2. Procédé suivant la revendication 1, caractérisé en ce que le service téléphonique ayant au moins un premier canal et un deuxième canal comporte une ligne RNIS.

3. Procédé suivant la revendication 1 ou 2, caractérisé en ce que l'étape qui consiste à établir une connexion de données bidirectionnelle en utilisant le deuxième canal est effectuée en réponse à l'actionnement par un appelant et une réponse des parties appelées.

4. Procédé suivant l'une quelconque des revendications 1 à 3, caractérisé en ce que la transmission de données d'image de l'un desdits au moins deux emplacements peut être désactivée par une partie.

5. Dispositif pour établir une communication audio et vidéo bidirectionnelle entre au moins deux emplacements différents, lesdits au moins deux emplacements étant couplés par l'intermédiaire d'un service téléphonique ayant au moins un premier canal et un deuxième canal, le dispositif comportant :
des moyens destinés à établir une connexion audio bidirectionnelle pour transférer des signaux audio entre lesdits au moins deux emplacements en utilisant le premier canal en tant qu'un canal audio ;
des moyens destinés à établir une connexion de données bidirectionnelle pour transférer des données d'image entre lesdits au moins deux emplacements en utilisant le deuxième canal en tant qu'un canal de données ;
des moyens destinés à terminer la connexion audio sur le premier canal et simultanément à multiplexer des signaux audio provenant de la connexion audio dans la connexion de données de sorte que les données multiplexées soient transférées sur le deuxième canal entre lesdits au moins deux emplacements ;
des moyens destinés à établir une connexion de données bidirectionnelles en utilisant le premier canal en tant qu'un canal de données ; et
des moyens destinés à permuter des signaux audio multiplexés et des données d'image pour utiliser les premier et deuxième canaux tous les deux en tant que canaux de données sans interruption notable du transfert des signaux audio et des données d'image entre lesdits au moins deux emplacements.

6. Dispositif suivant la revendication 5, caractérisé en ce que les services téléphoniques ayant au moins un premier canal et un deuxième canal comportent une ligne RNIS.

7. Dispositif suivant la revendication 5 ou 6, caractérisé en ce que les moyens destinés à établir une connexion de données bidirectionnelle en utilisant le deuxième canal sont agencés pour être sensibles à l'actionnement par un appelant et à une réponse des parties appelées.

8. Dispositif suivant l'une quelconque des revendications 5 à 7, caractérisé par des moyens destinés à désactiver la transmission de données d'image de l'un desdits au moins deux emplacements en réponse à une partie.
